# EUROPÄISCHE PATENTANMELDUNG

(11) **EP 1 850 051 A2**
(43) Veröffentlichungstag der Anmeldung: **31.10.2007**
(21) Anmeldenummer: 07002789.1
(22) Anmeldetag: 09.02.2007
(51) Int. Cl.: F16L 59/12

(54) **Festlegeteil, insbesonder Distanzteil**

(30) Priorität: 28.04.2006 DE 102006019852
(71) Anmelder: ElringKlinger AG, 72581 Dettingen (DE)
(72) Erfinder: Heiselbetz, Gerald, 90579 Langenzenn (DE)
(74) Vertreter: Bartels & Partner

(57) **Zusammenfassung**

Ein Festlegeteil, insbesondere Distanzteil, für Strukturbauteile wie Hitzeschilder (25, 37), mit einem bandförmigen Umfassungsteil (1) für die bereichsweise Anlage an einem abzuschirmenden Wärmekörper (3), weist am Umfassungsteil (1) federnde Verbindungsteile (21) auf, mittels denen der Umfassungsteil (1) auf dem Wärmekörper (3) stationär festlegbar ist.

## Beschreibung

Die Erfindung bezieht sich auf ein Festlegeteil, insbesondere Distanzteil, für Strukturbauteile wie Hitzeschilder.

Strukturbauteile wie Hitzeschilder, die ein Abschirmsystem oder Teil eines Abschirmsystemes bilden, finden insbesondere in der Kraftfahrzeugtechnik weit verbreitete Anwendung, um wärmeempfindliche Bauelemente wie Sensoren, Kraftstoffleitungen, Druckdosen etc. vor thermischer Überbeanspruchung zu schützen. Während zwar die Wärmeentwicklung beispielsweise eines sparsamen leistungsoptimierten Dieselmotors am Zylinder- oder Kurbelwellengehäuse gering sein kann, gilt das für "heiße Zonen", wie bei Abgaskrümmer, Turbolader, Katalysator etc. keineswegs, so dass Hitzeschilder an entsprechenden Stellen vorhanden sein müssen. Dies gilt insbesondere im Bereich von Katalysatoren, die wegen ihrer phasenweisen hohen Oberflächentemperatur starke Hitzequellen darstellen.

Bei derartigen Hitzequellen ist vielfach eine mehr oder weniger vollständige Kapselung erforderlich, wobei es wesentlich ist, dass die die Kapselung bildenden Hitzeschilder in einer vorbestimmten Position festgelegt sind, wobei zwischen Hitzeschild und dem heißen Wärmekörper eine gewünschte Distanzierung zumindest in Teilbereichen gegeben ist. In vielen Fällen gestaltet es sich schwierig, dieser Forderung gerecht zu werden. Es kann sich beispielsweise um Einbausituationen handeln, bei denen geeignete Befestigungsmöglichkeiten für eine eindeutige Positionierung von Hitzeschildern fehlen. Auch kann die eigentliche Montage der Hitzeschilder aufgrund eines zu geringen Freiraumes, der in einem betreffenden Motorraum zur Verfügung steht, schwierig und zeitraubend sein.

Im Hinblick auf diese Problematik stellt sich die Erfindung die Aufgabe, ein Festlegeteil zur Verfügung stellen, das eine Befestigung betreffender Strukturbauteile in eindeutiger und gegenüber einem Wärmekörper distanzierter Lageposition mit geringem Montageaufwand ermöglicht.

Gemäß der Erfindung ist diese Aufgabe durch ein Festlegeteil gelöst, das die Merkmale des Patentanspruches 1 in seiner Gesamtheit aufweist.

Danach sieht die Erfindung vor, dass das Festlegeteil einen bandförmigen Umfassungsteil aufweist, der seinerseits mittels federnder Verbindungsteile auf dem Wärmekörper festlegbar ist. Der Umfassungsteil kann somit auf einfache und bequeme Weise unmittelbar auf den Wärmekörper "aufgeklipst" werden. Dies kann auch bei beengten Platzverhältnissen mit geringem Montageaufwand erfolgen. Der aufgeklipste Umfassungsteil bildet sodann die Basis, d. h. die primären Anbringstellen, für entsprechende Hitzeschilder, beispielsweise zur Bildung einer Kapselung eines den Wärmekörper bildenden Katalysators.

Vorzugsweise besitzt der Umfassungsteil die Form eines Bügels, dessen Länge so bemessen ist, dass er den Außenumfang des Wärmekörpers, beispielsweise des runden Körpers eines Katalysators, teilweise, vorzugsweise auf etwa halber Umfangslänge, umfasst. Bei solcher Form des Umfassungskörpers ist ein bequemes Aufklipsen von der Seite her durchführbar und eine ausreichende Fixierung auf dem Wärmekörper sichergestellt, insbesondere wenn gemäß einem vorteilhaften Ausführungsbeispiel die Verbindungsteile durch blattfederartige Spannfedern gebildet sind, die sich in Verlängerung des Bügels von dessen beiden Enden weg erstrecken.

Vorzugsweise sind die Spannfedern so geformt, dass sie mit einem vor ihrem freien Ende gelegenen Spannbereich federnd am umfassten Wärmekörper anliegen und dass sie zwischen Spannbereich und ihrem freien Ende vom Wärmekörper weg nach außen umgebogen sind. Außer ihrer eigentlichen Spannfunktion, d. h. der Festlegung des Umfassungsteiles, können die Spannfedern mit ihrem nach außen umgebogenen Endbereich zusätzlich ein Distanzelement für ein Hitzeschild bilden und/oder mit einem solchen in der Weise in Eingriff sein, dass eine Verankerung gebildet wird, die nachgiebig sein oder eine definierte Relativbewegung des Hitzeschildes zulassen kann.

Bei besonders vorteilhaften Ausführungsbeispielen ist der den Umfassungsteil bildende Bügel in Teillängenbereichen dem Verlauf des Außenumfanges des Wärmekörpers folgend geformt und in anderen Teillängenbereichen für einen vom Wärmekörper distanzierten Verlauf mit Biegestellen versehen. Durch geeignete Ausbildung der Biegestellen ergeben sich somit auf einfache Weise Distanzelemente für daran anliegende Hitzeschilder.

Vorzugsweise weist der Bügel an beiden Enden eine sein jeweiliges Ende vom Wärmekörper distanzierende endseitige Biegestelle auf. Dabei kann die Anordnung so getroffen sein, dass sich die Spannfedern von einem vom Wärmekörper distanzierten Bereich der endseitigen Biegestellen ausgehend bis zum Spannbereich hin schräg zur Außenfläche des Wärmekörpers erstrecken. Dadurch steht ein entsprechender Federweg zur Kompensation thermischer Dimensionsänderungen zur Verfügung.

Bei Ausführungsbeispielen, bei denen der Bügel an beiden Enden einen vom Außenumfang des umfassten Wärmekörpers weg nach außen abgewinkelten Fortsatz aufweist, können diese Fortsätze Befestigungsstellen für Anbauteile wie Hitzeschilder bilden, beispielsweise indem an den Fortsätzen zur Bildung einer Verschraubung zumindest ein Schraubenloch vorgesehen ist, vorzugsweise mit daran angebrachter Schraubenmutter.

Die Anordnung kann so getroffen sein, dass am Bügel im Bereich von zwischen seinen Enden gelegenen Biegestellen ein vom umfassten Wärmekörper distanziertes Verschraubungselement für die Befestigung eines zweiten Hitzeschildes vorgesehen ist.

In besonders vorteilhafter Weise kann bei einem derartigen Ausführungsbeispiel die Anordnung so getroffen sein, dass erstes und zweites Hitzeschild jeweils eine zumindest teilweise Kapselung von etwa hälftigen, einander diametral gegenüberliegenden Umfangsbereichen des Wärmekörpers bilden. Damit ergibt sich nicht nur eine im wesentlichen komplette Kapselung des betreffenden Wärmekörpers, sondern ein Zusammenhalt des so gebildeten Abschirmsystemes in der Weise, dass die Festlegung der Hitzeschilder nicht nur aus der kraftschlüssigen Fixierung des Umfassungsteiles mittels der Spannfedern resultiert, sondern dadurch, dass beide Hitzeschilder, die mit dem Umfassungsteil verbunden sind, den Wärmekörper auf einander gegenüberliegenden Seiten einfassen (kapseln).

Der Umfassungsteil läßt sich einfach und kostengünstig in der Form herstellen, dass der bandförmige Bügel und die als federnde Verbindungsteile dienenden Spannfedern einstückig, vorzugsweise aus einem Federeigenschaften aufweisenden Edelstahl, geformt werden.

Nachstehend ist die Erfindung anhand eines in der Zeichnung dargestellten Ausführungsbeispieles im Einzelnen erläutert. Es zeigen:
- Fig. 1 eine perspektivische Schrägansicht eines Ausführungsbeispieles des erfindungsgemäßen Festlegeteiles, angebracht an einem kreiszylinderförmigen Katalysatorgehäuse, von dem lediglich ein Teillängenabschnitt gezeigt ist;
- Fig. 2 eine gegenüber Fig. 1 vergrößert gezeichnete Endansicht, gesehen auf das in Fig. 1 gezeigte, offene Ende des Katalysatorgehäuses, wobei mit dem Festlegeteil ein erstes und ein zweites Hitzeschild verbunden sind, die eine Kapselung des Katalysatorgehäuses bilden;
- Fig. 3 eine gegenüber Fig. 2 stark vergrößerte, perspektivische Schrägansicht, die lediglich den in Fig. 2 mit III bezeichneten Bezirk zeigt, wobei eine Verschraubung zwischen erstem Hitzeschild und Festlegeteil nur teilweise dargestellt ist;
- Fig. 4 den in Fig. 1 gezeigten Teillängenabschnitt des Katalysatorgehäuses mit daran angebrachtem ersten Hitzeschild, wobei dessen Verschraubung mit dem Festlegeteil nicht dargestellt ist, und
- Fig. 5 eine der Fig. 4 ähnliche Darstellung, jedoch gesehen auf das zu dem ersten Hitzeschild von Fig. 4 entgegengesetzt gelegene zweite, mit dem Festlegeteil verbundene Hiltzeschild.

Nachstehend ist die Erfindung anhand eines Ausführungsbeispieles erläutert, bei dem das erfindungsgemäße Festlegeteil für die Positionierung von Strukturelementen in Form eines ersten und eines zweiten Hitzeschildes vorgesehen ist, die eine Kapselung an der Außenseite eines Katalysators bilden. Es versteht sich, dass die Erfindung auch zur Positionierung andersartiger Strukturelemente geeignet ist.

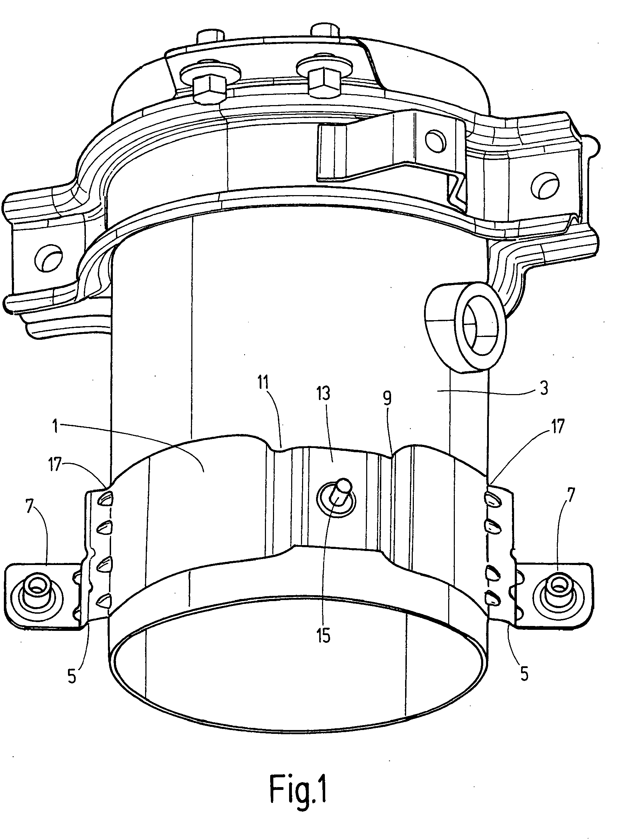

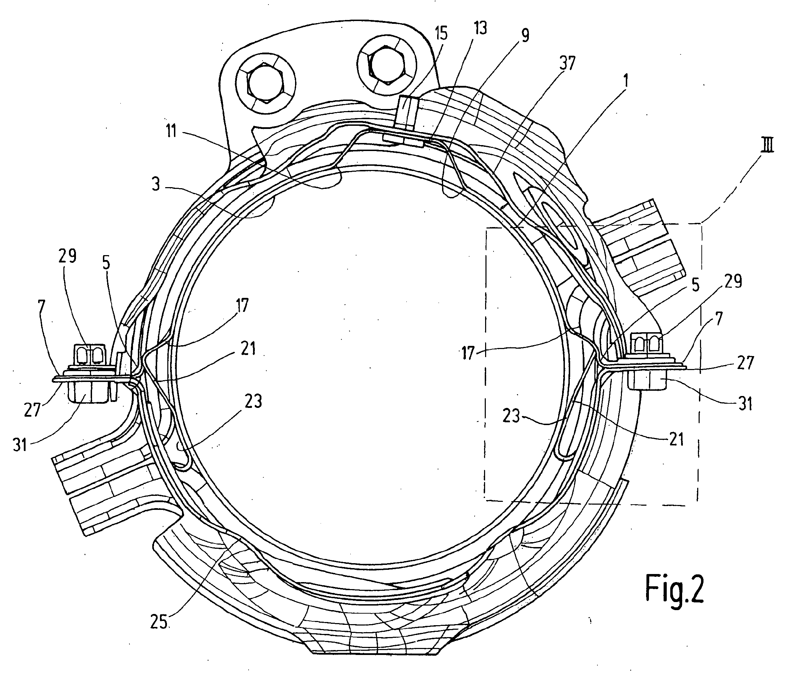

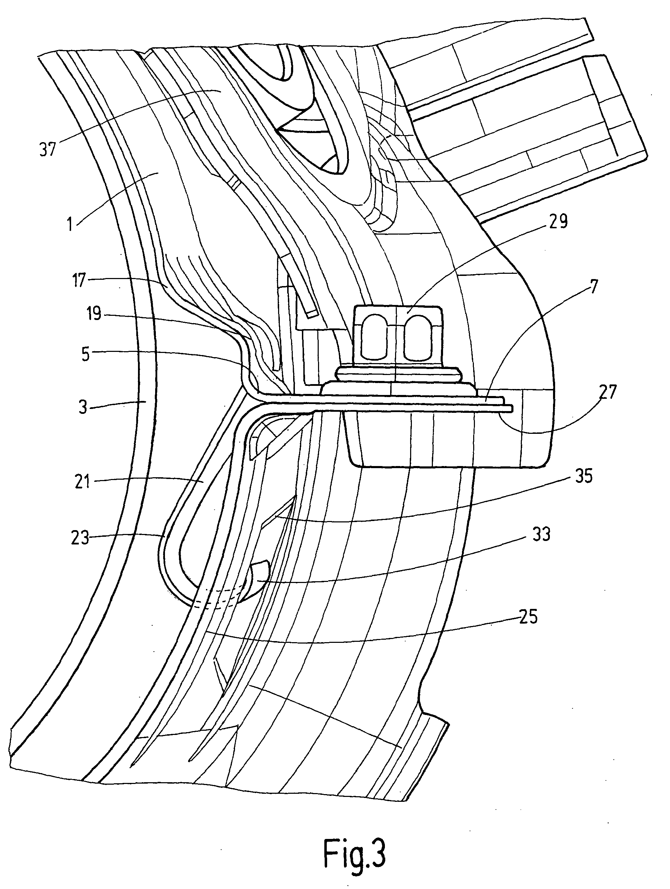

Fig. 1 zeigt das Festlegeteil in Form eines bandartigen Bügels 1 aus einem Federeigenschaften aufweisenden Metallblech, vorzugsweise aus einem Edelstahl. Der Bügel 1 ist mit in Fig. 1 nicht sichtbaren federnden Verbindungsteilen, die unten anhand der Fig. 2 und 3 näher beschrieben sind, auf dem kreiszylinderförmigen Außenumfang des Katalysators 3 festgelegt. Wie aus Fig. 2 entnehmbar, ist die Länge des Bügels 1 so bemessen, dass er den Außenumfang des Katalysators 3 in etwa auf dessen halber Umfangslänge umfasst. An seinen beiden Enden 5 weist der Bügel 1 je einen nach außen, d.h. bezogen auf die kreisbogenartige Krümmung des Bügels 1 radial verlaufenden flachen Fortsatz 7 auf.

Wie Fig. 2 und insbesondere Fig. 3 zeigen, hat der Bügel 1 nicht auf seiner ganzen Länge einen kreisbogenförmigen, dem Außenumfang des Katalysators 3 folgenden Verlauf, sondern weist Biegestellen auf, an denen der Bügel 1 vom umfassten Katalysator 3 distanziert ist. Dies ist an dem zwischen den Enden 5 mittig gelegenen Längenbereich der Fall, wo durch Biegestellen 9 und 11 (Fig. 2) ein radial nach außen versetzter ebener Längenabschnitt 13 gebildet wird, der ein Distanzelement und einen Träger für ein Verschraubungselement 15 bildet. Außerdem befindet sich vor jedem Ende 5 des Bügels 1 eine Biegestelle 17, durch die die Enden 5 des Bügels radial nach außen versetzt sind, so dass an den Enden 5 ebenfalls ein Distanzelement gebildet ist, von denen in Fig. 3 eines zu sehen und mit 19 bezeichnet ist.

An jedem Ende 5 des Bügels 1 erstreckt sich, von dem Distanzelement 19 ausgehend, eine als federndes Verbindungsteil dienende, blattfederartige Spannfeder 21 in Verlängerung des Bügels 1, wobei, wie besonders deutlich aus Fig. 3 zu ersehen ist, sich die jeweilige Spannfeder 21 in schrägem Verlauf radial nach innen erstreckt und mit einem Spannbereich 23 federnd am Außenumfang des Katalysators 3 anliegt. Wenn der Bügel 1 von der Seite her auf den Katalysator 3 aufgeklipst wird, also in die in Fig. 1 gezeigte Position gebracht wird, ist der Bügel 1 durch die Federkraft der Spannfedern 21 am Spannbereich 23 fixiert.

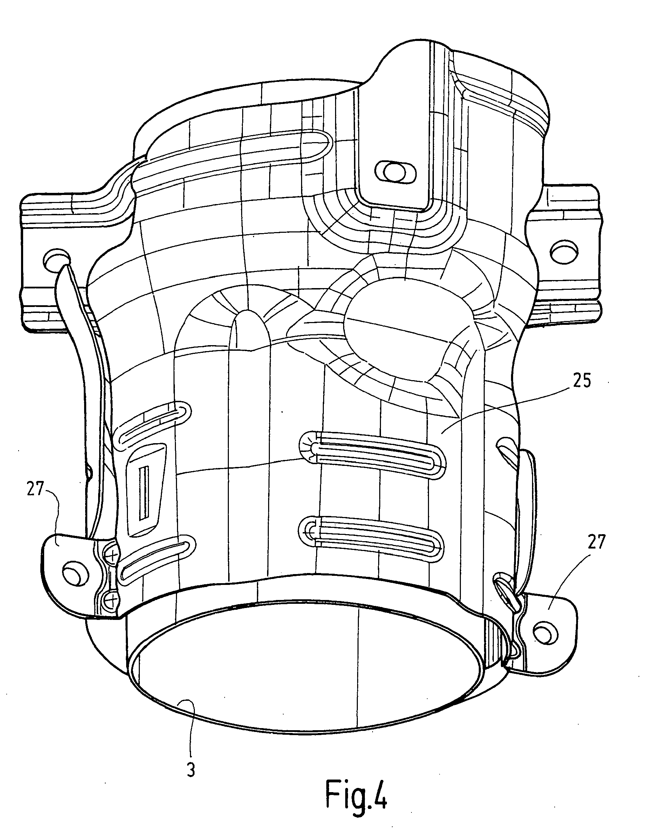

Als weiterer Fortgang des Montagevorgangs zur Herstellung der Kapselung des Katalysators 3 kann nunmehr ein erstes Hitzeschild 25, das wie aus Fig. 4 entnehmbar ist, im großen Ganzen halbschalenförmig gestaltet ist, mit dem auf den Katalysator 3 aufgeklipsten Bügel 1 verbunden werden. Wie bereits erwähnt, besitzt der Bügel 1 an seinen Enden 5 je einen nach außen abgewinkelten Fortsatz 7. Diese bilden eine Anbringstelle für das erste Hitzeschild 25, das, wie aus Fig. 4 ersichtlich ist, in Entsprechung zu den Fortsätzen 7 des Bügels 1, seitlich nach außen abgewinkelte Fortsätze 27 aufweist. Diese mit Schraubenlöchern versehenen Fortsätze 27 sind mit den Fortsätzen 7 am Bügel 1 verschraubbar, nämlich durch eine Verschraubung, die jeweils eine Einpressmutter 29 und eine Befestigungsschraube 31 aufweist (letztere ist in Fig. 3 weggelassen).

Wie am deutlichsten aus Fig. 3 entnehmbar ist, sind die Blattfedern 21 in ihrem sich an den Spannbereich 23 anschließenden, sich zum freien Ende 33 erstreckenden Abschnitt kreisbogenförmig radial nach außen umgebogen und greifen mit ihrem äußeren Ende 33 in eine nur in Fig. 3 gezeigte Ausnehmung 35 des ersten Hitzeschildes 25 ein. Die Ausnehmung 35 ist so dimensioniert, dass in Umfangsrichtung eine Relativbewegung zum Ausgleich thermischer Dimensionsänderungen erfolgen kann. Wie Fig. 2 und 4 verdeutlichen, ist das Hitzeschild 25 mit örtlichen Wölbungen versehen und so geformt, dass seine Innenseite gegenüber dem eingefaßten Katalysator 3 zumindest abschnittsweise distanziert ist.

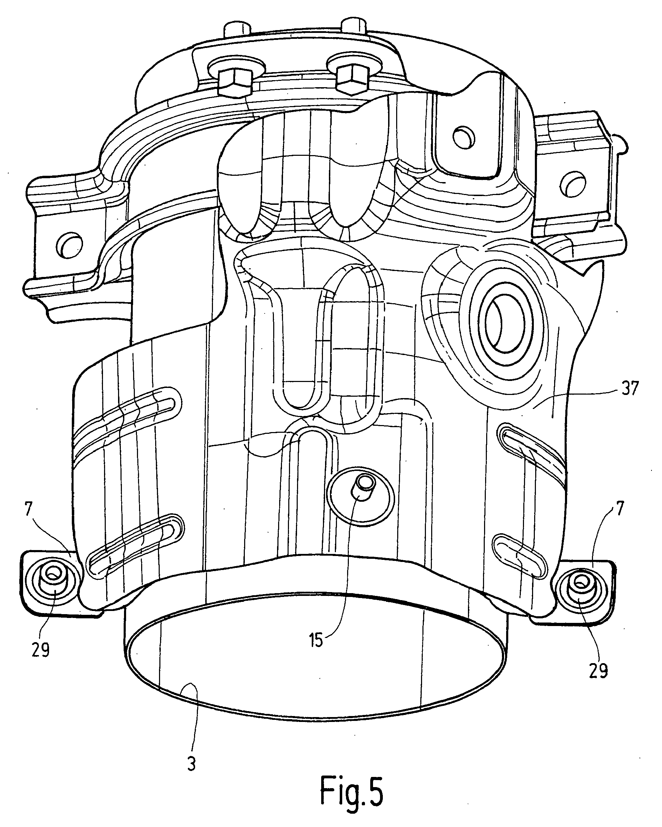

Um die Kapselung zu vervollständigen, wird ein in Fig. 5 in schräger Draufsicht zu sehendes, zweites Hitzeschild 37, das wie das erste Hitzeschild 25 eine Teilschale bildet, mittels des Verschraubungselementes 15 des Bügels 1 an diesem festgelegt (der mit dem Verschraubungselement 15 am Bügel 1 zusammenwirkende Teil der Gesamtverschraubung für das zweite Hitzeschild 37 ist in den Fig. nicht dargestellt). Wie insbesondere Fig. 2 zeigt, ist das zweite Hitzeschild 37 am Bügel 1 nicht nur über das Verschraubungselement 15 fixiert, sondern durch die Distanzelemente des Bügels 1, die sich durch dessen Biegestellen 9, 11 und 17 ergeben, gegenüber dem eingefaßten Katalysator 3 distanziert. Der Bügel 1 selbst ist auf dem Katalysator 3 nicht nur durch die Spannfedern 21 lagegesichert, sondern gegen ein Abziehen vom Katalysator 3 dadurch gesichert, dass das erste Hitzeschild 25 denjenigen Umfangsbereich des Katalysator 3 einfaßt, der vom Bügel 1 nicht umfasst wird. Dementsprechend ist das zweite Hitzeschild 37, das dem vom Bügel 1 umfassten Umfangsbereich des Katalysators 3 zugeordnet ist, ebenfalls durch die Verbindung mit dem Verschraubungselement 15 eindeutig lagefixiert und in gewünschter Weise vom eingefaßten Katalysator 3 mittels der am Bügel 1 vorgesehenen Distanzelemente (19 in Fig. 3 sowie Abschnitt 13 in Fig. 2) gegenüber dem Katalysator 3 distanziert.

## Patentansprüche

1. Festlegeteil, insbesondere Distanzteil, für Strukturbauteile wie Hitzeschilder (25, 37), mit einem bandförmigen Umfassungsteil (1) für die bereichsweise Anlage an einem abzuschirmenden Wärmekörper (3) und mit am Umfassungsteil (1) vorgesehenen federnden Verbindungsteilen (21), mittels denen der Umfassungsteil (1) auf dem Wärmekörper (3) stationär festlegbar ist.

2. Festlegeteil nach Anspruch 1, **dadurch gekennzeichnet, dass** der Umfassungsteil die Form eines Bügels (1) besitzt, dessen Länge so bemessen ist, dass er den Außenumfang des Wärmekörpers (3) teilweise, vorzugsweise auf etwa halber Umfangslänge, umfasst.

3. Festlegeteil nach Anspruch 2, **dadurch gekennzeichnet, dass** die Verbindungsteile durch blattfederartige Spannfedern (21) gebildet sind, die sich in Verlängerung des Bügels (1) von dessen beiden Enden (5) weg erstrecken.

4. Festlegeteil nach Anspruch 3, **dadurch gekennzeichnet, dass** die Spannfedern (21) so geformt sind, dass sie mit einem vor ihrem freien Ende (33) gelegenen Spannbereich (23) federnd am umfassten Wärmekörper (3) anliegen und dass sie zwischen Spannbereich (23) und ihrem freien Ende (33) vom Wärmekörper (3) weg nach außen umgebogen sind.

5. Festlegeteil nach Anspruch 4, **dadurch gekennzeichnet, dass** der Bügel (1) in Teillängenbereichen dem Verlauf des Außenumfanges des Wärmekörpers (3) folgend geformt und in anderen Teillängenbereichen für einen vom Wärmekörper (3) distanzierten Verlauf mit Biegestellen (9, 11, 17) versehen ist.

6. Festlegeteil nach Anspruch 5, **dadurch gekennzeichnet, dass** der Bügel (1) an beiden Enden (5) eine sein jeweiliges Ende vom Wärmekörper (3) distanzierende endseitige Biegestelle (17) aufweist.

7. Festlegeteil nach Anspruch 6, **dadurch gekennzeichnet, dass** sich die Spannfedern (21) von einem vom Wärmekörper (3) distanzierten Bereich (19) der endseitigen Biegestellen (17) ausgehend bis zum Spannbereich (23) hin schräg zur Außenfläche des umfassten Wärmekörpers (3) erstrecken.

8. Festlegeteil nach einem der Ansprüche 2 bis 7, **dadurch gekennzeichnet, dass** der Bügel (1) an beiden Enden (5) je einen vom Außenumfang des umfassten Wärmekörpers (3) weg nach außen abgewinkelten Fortsatz (7) aufweist, die Befestigungsstellen für Anbauteile wie Hitzeschilder (25) bilden.

9. Festlegeteil nach Anspruch 8, **dadurch gekennzeichnet, dass** die Befestigungsstellen an den Fortsätzen (7) zur Bildung einer Verschraubung mit einem Hitzeschild (25) mit zumindest einem Schraubenloch, vorzugsweise mit daran angebrachter Schraubenmutter (29), versehen sind.

10. Festlegeteil nach Anspruch 9, **dadurch gekennzeichnet, dass** am Bügel (1) im Bereich von zwischen seinen Enden (5) gelegenen Biegestellen (9, 11) ein vom umfassten Wärmekörper (3) distanziertes Verschraubungselement (15) für die Befestigung eines zweiten Hitzeschildes (37) vorgesehen ist.

11. Festlegeteil nach Anspruch 10, **dadurch gekennzeichnet, dass** erstes und zweites Hitzeschild (25, 37) jeweils eine zumindest teilweise Kapselung von etwa hälftigen, einander diametral gegenüberliegenden Umfangsbereichen des Wärmekörpers (3) bilden.

12. Festlegeteil nach einem der Ansprüche 2 bis 11, **dadurch gekennzeichnet, dass** der bandförmige Bügel (1) mit den federnden Verbindungsteilen (21) einstückig, vorzugsweise aus einem Federeigenschaften aufweisenden Edelstahl, geformt ist.
